(19) Europäisches Patentamt
European Patent Office
Office européen des brevets

(11) **EP 2 362 697 B1**

(12) **EUROPEAN PATENT SPECIFICATION**

(45) Date of publication and mention
of the grant of the patent:
**28.08.2013 Bulletin 2013/35**

(51) Int Cl.:
***H04W 52/02*** *(2009.01)*        *H04W 76/04* *(2009.01)*
***H04W 88/08*** *(2009.01)*

(21) Application number: **10360010.2**

(22) Date of filing: **15.02.2010**

(54) **Power saving**

Stromsparen

Économie d'énergie

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**31.08.2011 Bulletin 2011/35**

(73) Proprietor: **Alcatel Lucent
75007 Paris (FR)**

(72) Inventor: **Wong, Shin Horng
Chippenham,
Wiltshire, SN14 0SP (GB)**

(74) Representative: **Sarup, David Alexander et al
Alcatel-Lucent Telecom Ltd
Intellectual Property Business Group
Christchurch Way
Greenwich
London SE10 0AG (GB)**

(56) References cited:
**EP-A1- 2 154 921        WO-A1-2004/075583
WO-A1-2007/048750        US-A1- 2007 066 329
US-A1- 2010 008 276**

**Description**

FIELD OF THE INVENTION

The present invention relates to a method of controlling a discontinuous transmission and/or reception power saving mode of a base station in a wireless telecommunications network, and a computer program product and base station operable to carry out that method.

BACKGROUND

Wireless telecommunications networks are known. In a cellular system, radio coverage is provided by area. Those areas of radio coverage are known as cells. A base station is located in each cell to provide the radio coverage. User equipment in each cell receives information and data from the base station and transmits information and data to the base station.

Information and data transmitted by the base station to the user equipment occurs on channels of radio carriers known as downlink carriers. Information and data transmitted by user equipment to the base station occurs on uplink data channels of radio carriers known as uplink carriers.

In a universal mobile telecommunications system (UMTS) a base station (also known as a NodeB) continuously transmits a pilot signal. That pilot signal may also be known as a common pilot channel or C-PICH. The base station typically broadcasts the pilot channel all the time irrespective of whether there is any data traffic or user equipment in the cell. Transmissions from the base station are performed via one or more power amplifiers. Power amplifiers consume a large proportion of the power demanded by a base station.

It will be appreciated that such a "continuously on" arrangement helps to ensure that user equipment can reliably establish a connection and enables user equipment to roam through the network. However, a problem with such an arrangement is that such a wireless telecommunications network consumes a large amount of power. It has been proposed to allow a base station to operate in a discontinuous manner, thereby allowing transmission and reception of data traffic to occur in a cell at fixed times. Various problems are associated with implementation of such an approach across existing user equipment types.

US2007/0066329 describes a multi-mode base station including a transmit standby mode and an active mode. In transmit standby mode, the base station has no active state registered wireless terminals being serviced but may have some sleep state wireless terminals being serviced. In some embodiments, pilot signals and/or various control signals which are normally transmitted at a first periodic rate are transmitted at a reduced rate during a sleep mode of base station operation as compared to a full-on mode of base station operation. Base station transition between modes of operation can be triggered in a plurality of ways. The base station may operate in different modes according to a predetermined schedule. Alternatively, or in addition to scheduled modes of base station operation, in some embodiments base stations monitor for wireless terminal activity in the cell which they serve and adjust the mode of operation to correspond to the detected level of communications data activity.

US2010/0008276 describes a detection module and control module. The detection module determines whether a client station communicates with an access point during a predetermined period of time. The access point initially operates in a normal mode during the predetermined period of time. The control module transitions the access point from the normal mode to a power save mode based on whether the client station communicates with the access point during the predetermined period of time.

EP 2154921 describes a method for switching a base station between a standby mode and a fully activated mode. According to the method an activation signal is sent from user equipment to the base station.

It is desired to provide a wireless telecommunications network offering improved power efficiency across user equipment types.

SUMMARY

A first aspect provides a method of controlling a discontinuous transmission and/or reception power saving mode of a base station in a wireless telecommunications network, said base station being operable to communicate with at least a set of user equipment operating in a discontinuous transmission and/or reception mode, said user equipment being operable to periodically switch between an active mode in which communications with said base station can occur and an inactive mode in which said user equipment is dormant, said method comprising the steps of:

determining in accordance with said discontinuous transmission or reception mode of said user equipment in said set when each user equipment within said set will periodically switch to said active mode to communicate with said base station; and

switching said base station from an inactive state in which said base station is dormant to an active state in which communications with said user equipment can occur, when any of said user equipment within said set is determined to be in said active mode, thereby manipulating said power saving mode of said base station to accommodate said user equipment operating in a discontinuous transmission or reception mode.

The first aspect recognises that there can be comparatively long periods of time during which no, or very few, items of user equipment need to be supported by network node. Such situations may occur, for example, at night in rural areas. In such a situation, those network nodes may be powered for long periods of time unnecessarily. Whilst techniques exist to try and help to ameliorate this problem, none of the existing techniques have proved to be satisfactory since they generally make predictions about network usage and it is often the case that such predictions can be wrong. If a prediction is incorrect and a base station is turned off on the basis of a low traffic prediction, any user equipment in the area served by that base station may be left unable to communicate successfully with the wireless telecommunications network. Incorrect predictions can lead to either an undercapacity in the network, which causes resultant user problems, or maintains more capacity in the network than is necessary, which unnecessarily wastes power.

In particular, the first aspect recognises that it is possible to reduce power consumption in a network and yet maintain coverage and low-level communication with user equipment in periods of low network traffic.

Network nodes, such as user equipment, base stations, femto base stations, radio network controllers, or e-NodeB base stations of 4G architecture may operate in a "discontinuous reception" (DRx) or "discontinuous transmission" (DTx) mode. Such modes allow user equipment, for example, to save battery power when it is in an inactive period (for example, when user equipment is in an idle state).

During discontinuous reception user equipment operates to shut down its reception antenna and periodically wakes up to receive possible data traffic and information, for example, paging messages, from a base station.

Similarly, a discontinuous transmission (DTx) mode may be implemented by user equipment or other network nodes. In such a case, when in a substantially idle mode, user equipment shuts down its transmitter and only wakes up periodically to transmit packets of data to a base station.

Similarly, in periods of extremely low network activity, for example in a remote location, in the early hours of the morning, it is possible for a base station to implement discontinuous transmission and/or reception modes. It will be understood that switching a base station transmitter, and in particular its power amplifier, off may result in a significant power saving. In order to allow a base station to implement discontinuous transmission or reception it is necessary to inform user equipment of the DTx/DRx cycle, so that they do not attempt to communicate with such a base station whilst it is inactive. It will be appreciated that significant power savings can be achieved if a long DTx or DRx cycle is utilised.

The first aspect recognises, in particular, that a completely common DTx and/or DRx arrangement may only be successfully implemented where component capability allows. User equipment in such a case must be operable to receive and adapt operation in response to an indication of the DRx/DTx cycle to be implemented at a base station. That capability is typically not available for legacy user equipment, which may, for example, be operable to rely on an asynchronous DRx/DTx cycle. If a base station simply switches to a DTx mode regardless of user equipment capability, user equipment unable to match a common cycle may lose communication with the base station. Even if communication is not wholly lost, measurements made by those user equipment to set operating parameters will be disrupted by the power saving mode.

Accordingly, by modifying the behaviour of inactive and active states of a base station in response to active and inactive modes which user equipment in a geographical area served by the base station are operable to implement, rather than specifying a power saving mode which user equipment may be unable to implement, a base station may ensure that a power saving mode can be more successfully implemented.

Accordingly, it will be understood that the first aspect recognises that the relationship between a base station and user equipment, when setting parameters of a power saving mode, may be partially slave-like, rather than the wholly master-like behaviour typically implemented by a base station.

It has been appreciated that is possible to manipulate a base station DRx and/or DTx pattern to ensure operation in a power saving mode with legacy user equipment. In particular, it is possible to match base station transmission cycles to accommodate user equipment discontinuous reception cycles such that a base station may shut off its power amplifier and transmitter when such user equipment is asleep.

Legacy user equipment herein may be considered to be user equipment which has not implemented a common base station and user equipment DRx/DTx cycle capability, and cannot operate to understand a power saving mode "wake up" message issued by a base station. In current known network architectures, such legacy user equipment may falling into a number of types.

In one embodiment, the method further comprises the step of:

causing the user equipment within the set to switch to the active mode at different times.

It will be understood that if a completely common DTx/DRx cycle in which all active states of a network node match all active modes of all user equipment in a cell served by the network node may result in a significant data traffic spike in uplink and downlink data traffic when the active mode and state is initiated. Such a spike is likely to occur if, for example, a base station is serving a high number of user equipment.

It is possible for user equipment functionality to be attached to a machine or inanimate object, for example, a gas meter. Addition of wireless telecommunication technology to such machines is known as Machine Type Communication (MTC).

In MTC, user equipment is operated by a machine, for example, a gas meter or a CCTV camera, instead of being used by a human. Machine-operated user equipment will typically be expected to perform specific, well-defined functions.

Communication functionality of MTC devices can include time controlled transmission and/or reception, low data usage, extra low power consumption and will also typically involve low mobility. It will be understood that MTC-Ds may typically only need to receive or transmit data infrequently and can be switched off most of the time thereby extending their battery lives.

It will be understood that a common discontinuous transmission and reception cycle between a base station and all user equipment, including MTC devices, served by that base station allows the base station to be inactive for a maximum period of time. Nonetheless, an approach whereby user equipment (or MTC devices) are caused to switch to active mode at different times can act to spread the data traffic load, thereby mitigating the chance that a switch to active mode with result in a sudden overload of data traffic to be sent and received by the base station. It will be appreciated that compared to a completely common power saving cycle, it may be necessary for a network node, for example, to be in an active state for a longer period if the user equipment active mode initiation times are staggered in time.

In one embodiment, user equipment within the set remain in the active mode for an identical predetermined active period. Accordingly, each user equipment in the set may operate in the same periodic active and inactive pattern, that pattern being offset in time for each user equipment within the set.

In one embodiment, the user equipment within said set remain in the active mode for a differing predetermined active period. Accordingly, each user equipment in the set may operate in a different periodic active and inactive pattern.

In one embodiment, the step of causing comprises causing the user equipment within the set to switch to the active mode at different times in which the predetermined active periods overlap. Accordingly, each or all of the user equipment in the set may have active periods which overlap, or a proportion of user equipment in the set may have active periods which overlap. By overlapping active periods, the active state of a network node, for example, a base station may be moved towards a minimum whilst maintaining the advantages associated with spreading data traffic of user equipment by utilising overlapping user equipment active periods.

In one embodiment, the step of causing comprises causing the user equipment within the set to switch to the active mode at different times in which the predetermined active periods do not overlap. Accordingly, each or all of the user equipment in the set may have active periods which do not overlap, or a proportion of user equipment in the set may have active periods which do not overlap. By not overlapping active periods, the network node, for example, a base station, may ensure data traffic is spread over an active state of a network node.

In one embodiment, the step of causing comprises causing the user equipment within the set to switch to the active mode at different times in which the predetermined active periods are adjacent. Accordingly, each or all of the user equipment in the set may have active periods which are adjacent, or a proportion of user equipment in the set may have active periods which are adjacent. By placing user equipment active periods in an adjacent manner in time, the active state of a network node, for example, a base station may be moved towards a minimum whilst maintaining the advantages associated with spreading data traffic of user equipment by utilising adjacent user equipment active periods.

In one embodiment, the step of causing comprises causing the user equipment within the set to switch to the active mode at different times in which the predetermined active periods are spaced apart. Accordingly, each or all of the user equipment in the set may have active periods which are spaced apart, or a proportion of user equipment in the set may have active periods which are spaced apart. By spacing apart active periods, the network node, for example, a base station, may ensure data traffic is spread over an active state of a network node.

In one embodiment, each set of user equipment comprise user equipment having an identical type and the step of causing comprises causing user equipment from different sets to activate simultaneously.

It will be appreciated that different types of user equipment may require different manipulation or a different response by a network node, for example a base station, in order to effectively implement a power saving mode. It will further be appreciated that the power saving offered at a network node may be optimised based upon matching, as far as possible, inactive and active modes of sets of different types of user equipment such that a network node may be in an active state for a minimised time period. It will further be appreciated that the extent to which the active and inactive modes of sets of different types of user equipment may be different and the active modes of some types of, more responsive or configurable user equipment may advantageously be set on the basis of the active mode set by a set of user equipment of a less configurable type.

It will be appreciated that the active and inactive modes of sets of user equipment of different types may, or may not, be substantially identical. In the case where they are not substantially identical, the active and inactive modes implemented advantageously comprise a high degree of overlap and/or correspondence.

In one embodiment, the method further comprises the step of:

switching the network node to the inactive state when none of the user equipment are in the active mode. Accordingly, the inactive state of the network node may be maximised, thereby offering increased power savings.

In one embodiment, the method further comprises the step of:

preventing the network node from switching to the inactive state when it is determined that the network node would need to switch back to the active state within a predetermined minimum gap period. Accordingly, if a network node needs to switch back to an inactive state for a very short period of time, it may be determined that it would be more efficient overall if that switch to an inactive state did not occur. It will be appreciated that it may take a period of time for network node to switch to a full inactive state and to return to an active state and if said predetermined minimum gap period is less than a warm up and cool down time, the switch may not maximise overall operation efficiency.

In one embodiment, the method further comprises the step of:

causing at least one user equipment to switch to the active mode during the predetermined minimum gap period. It will be appreciated that some types of user equipment may be wholly configurable and their DTx/DRx may be highly controllable. In such a case it may be possible to utilise a period in a network node active state in which user equipment are not in an active mode and fill that space with data traffic from more configurable user equipment.

A second aspect provides a computer program product operable, when executed on a computer, to perform the method steps of the first aspect.

A third aspect provides a base station of a wireless telecommunications network, said base station being operable to implement a discontinuous transmission and/or reception power saving mode, and said base station being operable to communicate with at least a set of user equipment operating in a discontinuous transmission and/or reception mode, said user equipment being operable to periodically switch between an active mode in which communications with said base station can occur and an inactive mode in which said user equipment is dormant, said network node comprising:

determining logic operable to determine in accordance with said discontinuous transmission or reception mode of said user equipment in said set, when each user equipment within said set will periodically switch to said active mode to communicate with said base station; and

switching logic operable to switch said base station from an inactive state in which said base station is dormant to an active state in which communications with said user equipment can occur when said determining logic indicates that any of said user equipment within said set is determined to be in said active mode, thereby manipulating a power saving mode of said base station to accommodate said user equipment operating in a discontinuous transmission or reception mode.

In one embodiment, the network node further comprises causing logic operable to cause the user equipment within the set to switch to the active mode at different times. In one embodiment, the user equipment within the set remain in the active mode for an identical predetermined active period.

In one embodiment, the user equipment within the set remain in the active mode for a differing predetermined active period.

In one embodiment, the causing logic is operable to cause the user equipment within the set to switch to the active mode at different times in which the predetermined active periods overlap.

In one embodiment, the causing logic is operable to cause the user equipment within the set to switch to the active mode at different times in which the predetermined active periods do not overlap.

In one embodiment, the causing logic is operable to cause the user equipment within the set to switch to the active mode at different times in which the predetermined active periods are adjacent.

In one embodiment, the causing logic is operable to cause the user equipment within the set to switch to the active mode at different times in which the predetermined active periods are spaced apart.

In one embodiment, each set of user equipment comprise user equipment of having an identical type and the causing logic is operable to cause user equipment from different sets to activate simultaneously.

In one embodiment, the switching logic is operable to switch the network node to the inactive state when none of the user equipment are in the active mode.

In one embodiment, the switching logic is operable to prevent the network node from switching to the inactive state when it is determined that the network node would need to switch back to the active state within a predetermined minimum gap period.

In one embodiment, the causing logic is operable to cause at least one user equipment to switch to the active mode during the predetermined minimum gap period.

Further particular and preferred aspects are set out in the accompanying independent and dependent claims. Features of the dependent claims may be combined with features of the independent claims as appropriate, and in combinations other than those explicitly set out in the claims.

BRIEF DESCRIPTION OF THE DRAWINGS

Embodiments of the present invention will now be described further, with reference to the accompanying drawings, in which:

Figure 1 illustrates the main components of a wireless telecommunications network according to one embodiment;
Figure 2 illustrates a set of radio resource control states of user equipment suitable for use in the wireless telecommunications network of Figure 1; and
Figures 4 to 8 illustrate schematically various example implementations of power saving modes for use in the wireless telecommunications network of Figure 1.

DESCRIPTION OF THE EMBODIMENTS

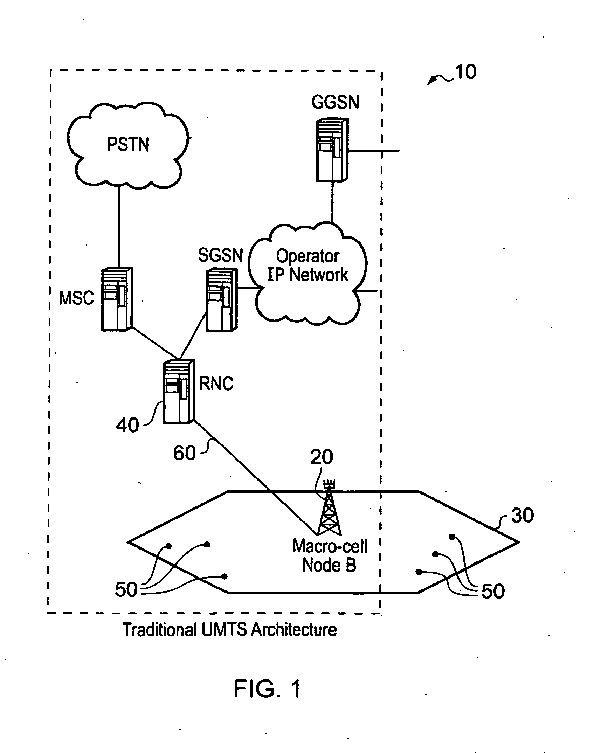

Figure 1 illustrates schematically the main components of a wireless telecommunications system 10 according to one embodiment. User equipment 50 roam through the wireless telecommunications system. Base stations 20 are provided which support areas of radio coverage 30. A number of such base stations 20 are provides and distributed geographically in order to provide a wide area of coverage to user equipment 50. When user equipment is within an area served by a base station 30, communications may be established between the user equipment and the base station over associated radio links. Each base station typically supports a number of sectors within the geographical area of service 30.

Typically a different antenna within a base station supports each associated sector. Each base station 20 has multiple antennas. It will be appreciated that figure 1 illustrates a small subset of a total number of user equipment and base stations that may be present in a typically communications system.

The wireless communications system is managed by a radio network controller (RNC) 40. The radio network controller 40 controls operation of the wireless telecommunications system by communicating with a plurality of base stations over a backhaul communications link 60. The RNC also communicates with user equipment 50 via each base station and thus effectively manages a region of the entire wireless communications system.

User equipment communicates with base station 20 by transmitting data and information on channels known as "uplink" or "reverse" channels, and base station 20 communicates with user equipment 50 by transmitting data and information on radio channels known as "downlink" or "forward" channels.

User equipment 50 may operate in a "discontinuous reception" (DRx) or "discontinuous transmission" (DTx) mode. Such modes allow user equipment 50 to save battery power when the UE is in an inactive period (for example, when user equipment is in an idle state).

During discontinuous reception user equipment 50 shuts down its reception antenna and periodically wakes up to receive possible data traffic and information, for example, paging messages, from wireless telecommunications network 10 via data sent on downlink channels to user equipment 50 from base station 20. If the messages received by user equipment 50 in the wake-up periods are deemed to exceed a threshold, or indicate that base station 20 wishes to send more information to user equipment 50, user equipment is operable to exit from the discontinuous reception mode.

Similarly, a discontinuous transmission (DTx) mode may be implemented by user equipment. In such a case, when in a substantially idle mode, user equipment shuts down its transmitter and only wakes up periodically to transmit packets of data to the network 10 via uplink channels to the base station 20.

Furthermore, in periods of extremely low network activity, for example in a remote location, in the early hours of the morning, it is possible for a base station to also implement discontinuous transmission and/or reception modes. It will be understood that switching a base station transmitter, and in particular its power amplifier, off may result in a significant power saving. In order to allow a base station to implement discontinuous transmission or reception it is necessary to inform user equipment of the DTx/DRx cycle, so that they do not attempt to communicate with the network 10 whilst their primary serving base station 20 is asleep. It will be appreciated that significant power savings can be achieved if a long DTx or DRx cycle is utilised.

In order to synchronise operation of user equipment 50 in a cell 30 served by a base station 20, the base station 20 has its own reference time frames, and indicates the system time frames to user equipment when they first connect. The reference time frames are not correlated between base stations. The reference time frames in known wireless telecommunications systems, for example, UMTS and LTE architecture systems, is achieves by use of a system frame number. A system frame number (SFN) is used to identify the framing and timing of a cell served by a base station. System frame number cycles through a range of values from 0 to 4095 in UMTS and 0 to 1023 in LTE.

DTx and DRx cycles can be specified by reference to a SFN. Use of SFN to control discontinuous transmission or reception cycles maximum cycle length of 4096 radio frames. Since one radio frame lasts 10ms, this means that the maximum cycle length for a UMTS network is 40.96 seconds.

It is possible, if component capability allows, to implement a base station DTx and/or DRx cycle such that a base station and all user equipment served by that base station follow a completely common cycle. It will be appreciated that such an arrangement allows a base station to shut off its transmitter or receiver for a maximum amount of time and still maintain communication with user equipment. However, such an arrangement may cause a spike in network data traffic and overload a base station.

Furthermore, a completely common DTx and/or DRx arrangement may only be successfully implemented where component capability allows. User equipment in such a case must be operable to receive and adapt operation in response to an indication of the DRx/DTx cycle to be implemented at a base station. That capability is typically not available for legacy user equipment, which are operable to rely on an asynchronous DRx/DTx cycle. If a base station switches to a DTx mode regardless of user equipment capability, user equipment unable to match a common cycle may lose communication with the base station. Even if communication is not wholly lost, measurements made by those user equipment to set operating parameters will be disrupted by the power saving mode. Those effects could be ameliorated by applying a very short DTx/DRx base station cycle, but that approach limits potential power saving.

It is possible to manipulate a base station DRx and/or DTx pattern to ensure operation in a power saving mode with legacy user equipment. In particular it is possible to match base station transmission cycles to accommodate user equipment discontinuous reception cycles such that a base station may shut off its power amplifier and transmitter when such user equipment is asleep.

Legacy user equipment herein may be considered to be user equipment which has not implemented a common base station and user equipment DRx/DTx cycle capability, and cannot operate to understand a power saving mode "wake up" message issued by a base station. In current known network architectures, such legacy user equipment may, for example, comprise user equipment falling into the following categories:

1) Release 8 and post Release 8 user equipment
2) Pre-Release 8 user equipment

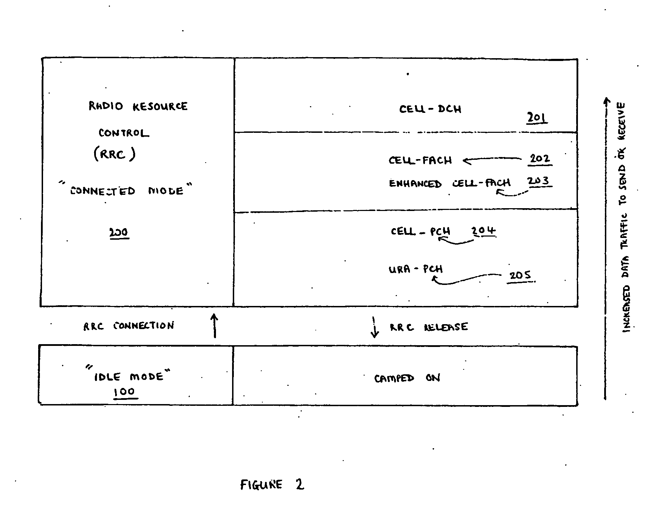

By way of background, Figure 2 illustrates schematically various radio states in which user equipment 50 may operate in a UMTS telecommunications network. On initial turning on of user equipment in a cell 30, it will typically be in "idle mode" 100. Once it synchronises and attaches itself to a base station 20, it gains a radio resource control (RRC) connection and is referred to as being in connected mode 200. User equipment in idle mode does not have a Radio Resource Control (RRC) connection.

If user equipment is RRC connected 200, it can be in one of five different RRC states: Cell_DCH (201), Cell_FACH (202), Enhanced Cell_FACH (203), Cell_PCH (204) and URA_PCH (205) states.

User equipment typically moves into Cell_DCH (201) state when its traffic is high, since in such a state the user equipment is allocated a dedicated channel on which to transmit and receive data from base station 20. In UMTS network architecture, user equipment can be in Cell_DCH state, where it is expected to have high volume of traffic.

Base station power saving modes implementing DRx/DTx are currently not intended for use with user equipment operating in a Cell_DCH state.

Legacy user equipment operating in a non-Cell_DCH state (e.g. Enhanced Cell_FACH, Cell_PCH, URA_PCH and Idle mode) may only be able to perform DRx. Legacy user equipment typically transmits on a Random Access Channel (RACH) when operating in either Enhanced Cell_FACH or Cell_FACH states. Transmission on a RACH can occur at any time, and as a result, it is difficult for a base station to turn off its receiver whilst legacy user equipment is operating in those states. However, data traffic transmitted on a RACH is expected to be transmitted several times by user equipment trying to transmit data to a base station, and hence it is possible for a base station to perform short DRx patterns with some probability of capturing messages and data sent by legacy user equipment on a RACH. It will be appreciated that the particular configuration of the short cycles can be configured by an operator.

Examples of methods by which a base station may implement a power saving mode align such that base station DTx may be aligned with user equipment DRx are set out below:

***Release 8 and Post-Release 8 user equipment***

In such known legacy architectures, user equipment is moved from a Cell_DCH state to a Cell_FACH state if it is deemed that its data traffic is low. In a Cell_FACH state user equipment is limited and may only receive and transmit at low data rate. If in an Enhanced Cell_FACH state, user equipment is able to receive infrequent High Speed Downlink Packet Access (HSDPA) packets. Since the traffic volume is not expected to be high in Enhanced Cell_FACH, a DRx cycle was introduced into Enhanced Cell_FACH in Release 8, for the UE to conserve energy. User equipment operating in such a state operates to "wake up" if the current system frame number meets the condition set out in Equation 1:

$$(SFN - H\text{-}RNTI) \bmod DRX\_cycle\_HSDPA < Rx\_burst$$

$$\textit{Equation 1}$$

Where:

*H-RNTI* is a 16 bit identity given to a user equipment when it is configured to receive HSDPA packets

*DRX_cycle_HSDPA* is the length of the DRx cycle in radio frames with a maximum value of 32 frames

*Rx_burst* is the period in frames within the DRx cycle in which the user equipment receives HSDPA packets

It will be appreciated that all variables in Equation 1 can be made common except for the H-RNTI since the H-RNTI is used to identify each individual user equipment set. However, H-RNTI can be assigned such that a user equipment set can have a DRx cycle as desired by a base station, by appropriate use of a Radio Access Bearer configuration or other signalling methods.

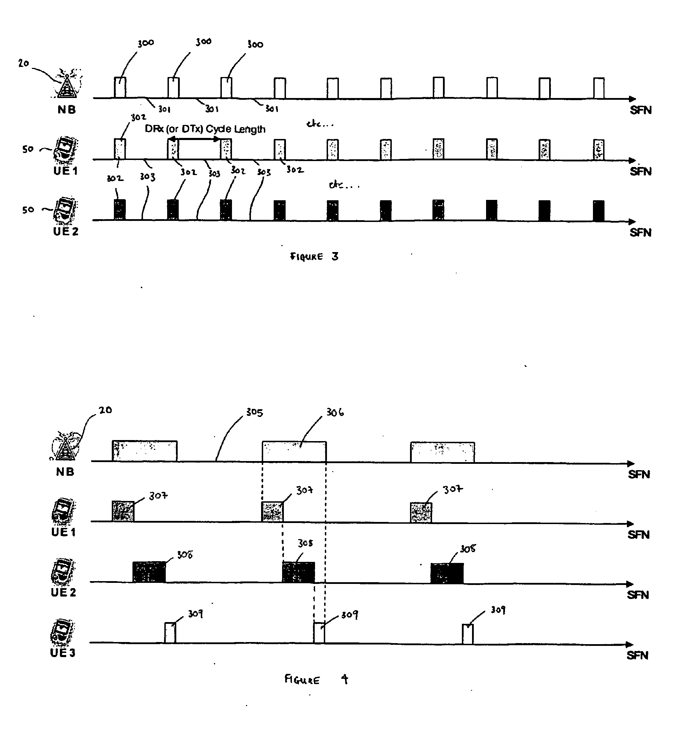

Figure 3 illustrates schematically a method of manipulating legacy user equipment to perform a common power saving cycle. In the arrangement shown in Figure 3 legacy user equipment 50 operating in an Enhanced Cell_FACH state are manipulated by a base station 20 to operate in a common power saving cycle whereby base station is operable to transmit at periods 300, and is asleep between those periods 301, and user equipment is operable to receive at periods 302 which correspond to periods 300 and to sleep in periods 303 corresponding to base station sleep period 301. That cycle is achieved by manipulating H-RNTI such that they are *DRX_cycle_HSDPA* apart. That is to say, for example, if the *DRX_cycle_HSDPA* is 32 radio frames and is common, the H-RNTI of the user equipment is manipulated such that they are *X* + 32N, where N = 0, 1, 2, 3 etc. Accordingly, this way all legacy user equipment wakes up at the same time and the base station can shut off its transmitter during the periods of inactivity. It will be appreciated that such a method essentially looks at possible active and inactive modes that can be implemented by legacy user equipment and sets active and inactive states at the base station in accordance with what is achievable by legacy user equipment. In this way, a base station does not act in a pure "master" manner, but instead implements a partial "slave" approach to setting its own active and inactive states.

Figure 4 illustrates schematically a method by which a power saving mode of a base station 20 can be implemented whereby completely common power saving cycles at user equipment UE1, UE2, UE3 are avoided. In this example, inactive periods in base station transmission 305, and active periods in base station transmission 306 are formed by determining a superposition of user equipment, UE1, UE2, UE3 DRx cycles. The base station inactivity period 305 can be determined by the difference in the mod of user equipment H-RNTIs in combination with the common *DRx_cycle_HSDPA*.

Figure 4 illustrates the resulting user equipment cycles which can be achieved by manipulating user equipment UE1, UE2, UE3, allocated H-RNTI according to *X*, *X* + 1, *X* + 2, ..., *X* + *M*. Where, in this example *M* < DRx_cycle_HSDPA, otherwise there is no gap of base station inactivity.

Hence by manipulating the difference in user equipment H-RNTI (specifically the *H-RNTI* mod *DRx_cycle_HSDPA*), a desired base station DTx pattern can be achieved. In the illustrative example of Figure 4 user equipment activation periods 307, 308, 309, are directly adjacent, do not overlap, and fill base station active transmission periods 306.

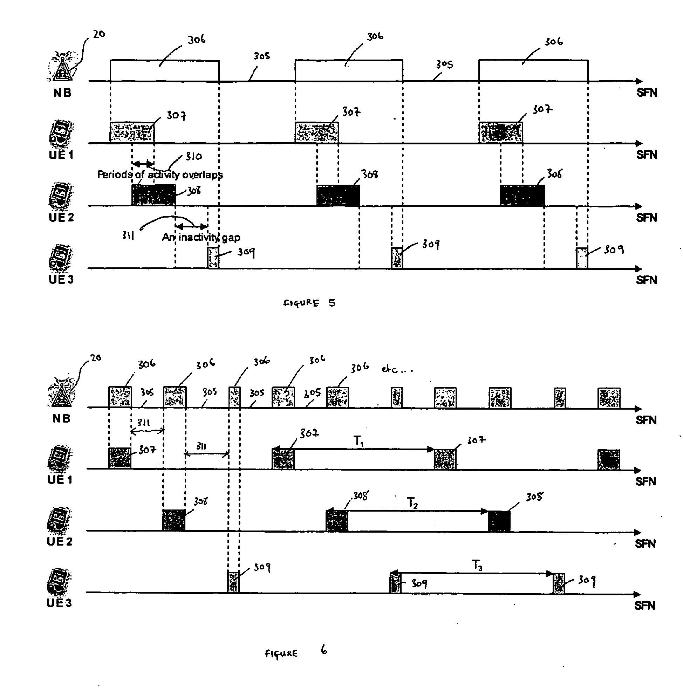

Figures 5 and 6 illustrate schematically alternative implementations of the method described in relation to Figure 4, and an identical numbering convention has therefore been used throughout those Figures.

In the example shown in Figure 5, user equipment activation periods 307 and 308 include a period of overlap, 310. Furthermore, there is a period of user equipment inactivity 311 between the end of user equipment activation period 308 and the commencement of user equipment activation period 309. That user equipment inactive period 311 falls within base station active period 306.

In the example shown in Figure 6, user equipment activation periods 307, 308 and 309 are spaced by inactive periods 311. In this example, base station 20 operates such that its active periods 306 match those of the user equipment UE1, UE2, UE3, and rather than have a single activation period which covers all user equipment activation periods, the base station switches to an inactive state in the inactive user periods 311.

Since a base station may control of all user equipment DRx/DTx cycles, it is possible for user equipment to have different DRx/DTx cycles and for a base station to implement a DRx/DTx pattern that matches user equipment DRx/DTx cycles. For example, the UEs DRx/DTx cycles can be such that their periods of activity are staggered as shown in Figure 4 or may include some overlaps and gaps as shown in Figure 5. These DRx/DTx cycles may be different for each user equipment but such an arrangement still allows the base station to shut off its transmitter since a known period of inactivity will occur.

In Figure 6, it can be seen that it is possible for the base station to be inactive during the small gaps between UE1, UE2 and UE3 DRx/DTx patterns. However, if the gap is too small, it may be more effective in for the base station to be active during those small gap periods. If the gaps between user equipment DRx/DTx patterns are large, the NB can afford to shut off its transmitter or receiver during period of inactivity. In Figure 6 user equipment DRx/DTx cycle lengths are $T_1$, $T_2$ and $T_3$ for UE1, UE2 and UE3 respectively. $T_1$, $T_2$ and $T_3$ can be common or different as long as they are large enough for the base station to effectively become inactive.

**Pre-Release 8 User Equipment**

Pre-Release 8 user equipment, when not in a Cell_DCH state, is typically operable to perform DRx only when in Cell_PCH, URA_PCH and Idle states. In these states, user equipment is operable to wake up at predetermined system frames and monitor for possible paging messages. Those predetermined system frames are referred to as "paging occasions" and the conditions for paging occasions are described in Equation 2:

$$Paging\ Occasion = \{(IMSI\ div\ K)\ mod\ DRX\_cycle\_length\} + n * DRX\_cycle\_length + Frame\_Offset$$

*Equation 2*

Where,

*IMSI*: International Mobile Subscriber Identity of user equipment. A unique identification number store in each mobile phone SIM

*K*: the number of available SCCPCH (Secondary Common Control Physical Channel)

DRX_cycle_length: Is the DRx cycle measured in radio frames with a maximum value of 512 frames giving a maximum DRx cycle of 5.12 seconds. The *DRx_cycle_length* can be different for Idle mode and non-Idle modes (Cell_PCH and URA_PCH). In Idle mode, the *DRx_cycle_length* is given by the Core Network whilst for Cell_PCH and URA_PCH it is specific to the UTRAN.

*n* = 0, 1, 2, .. maximum SFN value (for example, 4095 in UMTS architecture)

*Frame_Offset* is a radio frame offset

The *DRx_cycle_length* in Equation 2 is common for a given user equipment RRC state. *Frame_Offset* can be set to a common value. *IMSI* is unique and its value cannot be controlled by a base station.

For user equipment in a Cell_PCH state, a base station can determine the superposition of all the user equipment DRx cycles and determine a DTx pattern for itself, based on those cycles. For example, if the gaps between two user equipment "wake up" periods are sufficiently large, a base station may operate to shut off its transmitter during that time.

For Pre-Release 8 user equipment, a base station is not aware that user equipment in URA_PCH state or in Idle mode is connected to it. For user equipment in Idle mode or a URA_PCH state, a base station operating in DTx mode can decide whether to page such user equipment if a paging occurs. The decision may be based on whether the paging occasion coincides with the base station "wake up" period.

*Mixture of Different User Equipment Releases*

It is expected that there may typically be a mixture of different releases of user equipment in a cell served by a base station 20. It will be appreciated that it would be advantageous to implement a power saving mode at a base station. If a base station determines that that the level of data traffic activity is sufficiently low in its cell 30 for it to implement a power saving mode utilising DRx and/or DTx it may take steps to ensure the majority of user equipment attached to the base station can maintain operation.

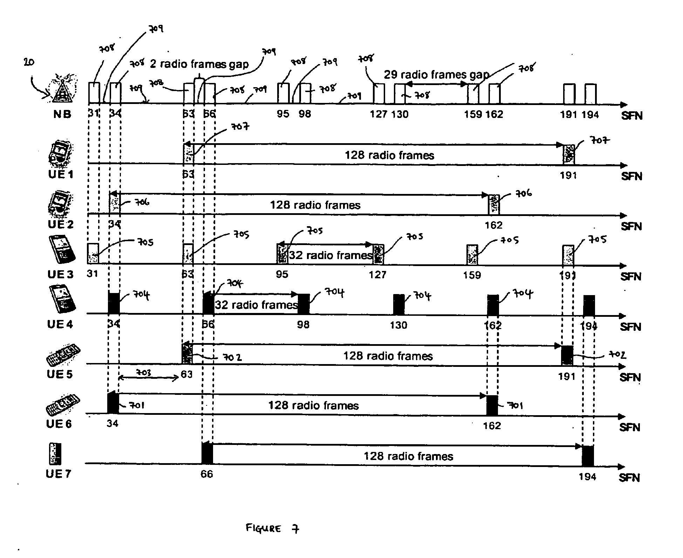

Figure 7 illustrates an implementation of one embodiment of a power saving mode involving mixed types of user equipment.

In a case where base station 20 serves various user equipment (UE1 to UE7) falling into various user equipment types, and it identifies that data traffic in its cell 30 is sufficiently low to implement a power saving mode, the base staton 20 operates move all pre-Release 8 user equipment to a Cell_PCH state and all Release 8/Post-Release 8 user equipment to a DRx mode in Enhanced Cell_FACH state.

The base station 20 acts to reconfigure the user equipment H-RNTIs (as described above) for Release 8/Post Release 8 user equipment such that the reconfiguration results in a minimised base station "wake up" period.

For new user equipment having fully configurable power saving modes, the base station operate to configure their DRx/DTx modes such that their "wake up" periods will coincide with legacy user equipment "wake up" periods.

In the example illustrated in Figure 7, a base station 20 serves a mixture of different user equipment types as summarised in Table 1.

**Table 1: UE Release/Type and DRx/DTx Cycle Length**

| UE ID | Release/Type | DRx (or DTx) Cycle Length (Radio Frames) |
|-------|--------------|------------------------------------------|
| UE1 | New | 128 |
| UE2 | New | 128 |
| UE3 | Release 8/ Post Release 8 | 32 |
| UE4 | Release 8/ Post Release 8 | 32 |
| UE5 | Pre-Release 8 | 128 |
| UE6 | Pre-Release 8 | 128 |
| UE7 | Idle mode or URA_PCH state | 128 |

When the base station 20 decides to move into a power saving mode (ie DTx), it begins by reconfiguring UE5 and UE6 to operate in a Cell_PCH state. Base station 20 would not be aware that UE7 is in its coverage area since it is in Idle mode, and as a consequence can take no steps to reconfigure the radio connected state of UE7.

In the example shown UE5, UE6 and UE7 have the following IMSI as shown in Table 2:

**Table 2: Pre Release 8 UE DRx Parameters**

| UE ID | IMSI | (IMSI div K) mod DRX cycle length | Paging Occasion (SFN) |
|-------|------|-----------------------------------|-----------------------|
| UE5 | 372648374618237 | 63 | 63 + 128n |
| UE6 | 857493576354628 | 34 | 34 + 128n |
| UE7 | 847382956473732 | 66 | 66 + 128n |

Using Equation 2 and the IMSI in Table 2, the SFN in which UE5, UE6 and UE7 shall "wake up" to listen to possible paging can be calculated and are shown in column 4 of Table 2, and are graphically illustrated as blocks 701 and 702 in Figure 7.

To maintain network functionality, base station 20 needs to be in an active state during the paging occasions of UE5 and UE6 (702, 701 respectively) and determines that a gap of inactivity 703 between UE5 and UE6 paging occasions 701, 702 of 29 radio frames (64-34) is big enough for it to save power by turning off its transmitter. The threshold value for turn off may be determined by an operator.

Since, in this example, there are two DRx cycles being implemented by pre-Release 8 user equipment, base station 20 can reconfigure the H-RNTI for the Release 8 and post Release 8 user equipment to coincide with one or both of those "wake up" periods.

In this example, the *Rx_burst* = 1 in Equation 1 and the base station decides implement a power saving mode for UE3 and UE4 in which at least one of their "wake up" periods 705, 704 in their power saving discontinuous cycle coincides with the active periods 702, 701 of UE5 and UE6 respectively. This is achieved by setting the H-RNTI for UE3 and UE4 as in Table 3. It will be appreciated that there are other H-RNTI settings that can achieve the same DRx cycle.

*Table 3: Possible H-RMI for UE3 and UE4*

| UE ID | H-RNTI | Rx_burst |
|-------|--------|----------|
| UE3 | 63 | 1 |
| UE4 | 34 | 1 |

Finally for user equipment in which the power saving mode is fully configurable UE1 and UE2, a simple "wake up" ID can be used for each of those user equipment. The "wake up" ID of a system frame number in which new user equipment UE1, UE2 operates to be active may be calculated according to the condition set by Equation 3:

$$(SFN - ACTIVE\_ID) \bmod DRX\_cycle\_Energy\_Saving < Rx\_burst$$

*Equation 3*

Where:

*ACTIVE_ID* is a group identity given to user equipment for it to calculate the SFN in which it should wake up

*DRX_cycle_Energy_Saving* is the length of the DRx cycle in radio frames

*Rx_burst* is the period in frames within the DRx cycle in which user equipment receives HSDPA packets

It will be appreciated that Equation 3 is an example of an equation which may set a wake up ID for fully configurable user equipment such as UE1 and UE2. There are other equations that may achieve the same outcome.

Assuming Equation 3 is used in the illustrative example for the new user equipment UE1 and UE2, and that the Rx_burst is 1, and that UE1 and UE2 can both have ACTIVE_ID shown in Table 4. NOTE: Multiple UEs can have the same *ACTIVE_ID* since this *ACTIVE_ID* is just an indication of when the UE needs to "wakes up".

*Table 4: Possible ACTIVE_ID for UE1 and UE2*

| UE ID | ACTIVE_ID | Rx_burst |
|-------|-----------|----------|
| UE1 | 63 | 1 |
| UE2 | 34 | 1 |

Such a method results in an active period 706 for user equipment UE2, which has been set to match the active period 701 of user equipment UE6, and an active period 707 for user equipment UE1 which has been set to match the active period 702 of user equipment UE5.

The DRx cycles of UE1 to UE7 and the corresponding DTx cycle of base station 20 are shown in Figure 7. The resultant base station DTx pattern shown in Figure 7 is determined by superimposing the active periods 701, 702, 704, 705, 706 and 707 to give base station active periods 708. The DTx pattern comprises active periods 708 and inactive periods 709. The pattern in the example of Figure 7 consists of a 2 radio frames inactive gap and a 29 radio frame of inactive gap.

The base station may determine that a 2 radio frame gap is being too small for any efficient energy saving and may choose not to switch to an inactive state for those 2 radio frames. In such a case the base station DTx pattern consists of a 29 radio frame inactive gap.

The base station remains unaware of UE7 since it is in an idle mode. It is up to operator to configure whether a paging message for UE7 will be indicated to the user equipment by the base station 20. In this illustrative example, the Paging Occasion for UE7 coincides with the calculated base station DTx pattern hence, the base station may page UE7 when a paging indication for that user equipment occurs.

It is possible for user equipment functionality to be attached to a machine or inanimate object, for example, a gas meter. Addition of wireless telecommunication technology to such machines is known as Machine Type Communication (MTC). MTC is sometimes referred to as Machine to Machine communication (M2M).

In MTC, the user equipment is used by a machine, for example, a gas meter or a CCTV camera, instead of being used by a human. A MTC user equipment will be referred to as an MTC Device (MTC-D), and should be understood to be user equipment operated by a machine. Unlike a human, machine-operated user equipment will typically be expected to perform specific, well-defined functions. As a result a MTC-D can be a simplified version of traditional human operated user equipment, since it need only cater for the specific, well-defined functions. It will be understood that a MTC-D can thus be cheaper than user equipment.

Communication functionality of MTC-D can include time controlled transmission and/or reception, low data usage, extra low power consumption and will also typically involve low mobility. It will be understood that MTC-Ds may typically only need to receive or transmit data infrequently and can be switched off most of the time thereby extending their battery lives. It can be seen that MTC-D can advantageously have long DTx or DRx periods.

**High Volume Simultaneous Access to a Base Station**

Although a completely common base station and user equipment cycle DRx/DTx mode allows the base station to maximize its period of inactivity, such an arrangement may result in overloading of a base station if all user equipment in a cell operate to wake up at the same time to access the base station.

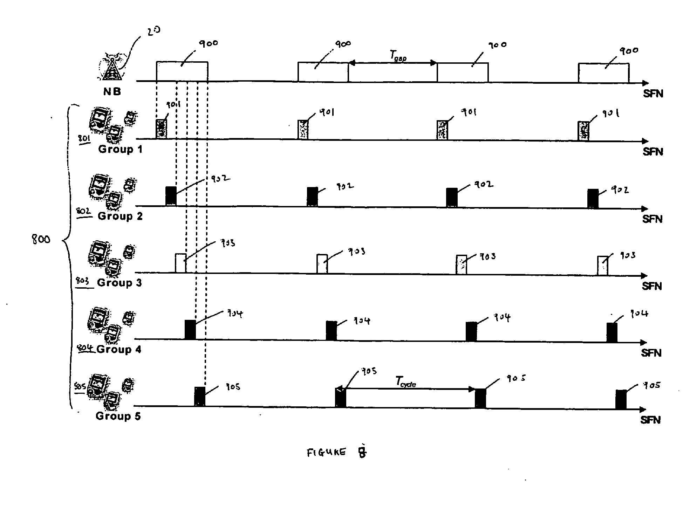

A possible solution to such a scenario is illustrated in Figure 8 and may occur if, for example, a base station serves an area in which a large number of MTC devices are present. Such MTC devices may typically perform updates which are transmitted to a base station during the night. If user equipment is controlled such that groups of user equipment have different cycles (or even the same cycle with a fixed offset in time). Such an arrangement ensures that the level of simultaneous uploads to a base station is reduced.

In particular, a base station may be operable to group user equipment into several groups and stagger their DRx/DTx cycles as shown in Figure 8. In this way, a base station 20 need only to handle the traffic of a fraction of all the user equipment at any given point in time. One way to achieving this is to give each user equipment a "wake up" ID, (e.g. an *ACTIVE_ID*) which user equipment may use to calculate a system frame number in which it needs to "wake up". Such an implementation may comes at the expense that a base station may needs to wake up more frequently, or for a longer period of time.

In the example illustrated schematically in Figure 8, the cell served by base station 20 includes a high number of smart metering MTC devices 800. An operator may schedule an upload and download relating to of smart meter readings to meters 800 during the night. If there are 100 such MTC devices 800 within the cell 30 of base station 20, base station 20 may group MTC devices 800 into 5 groups (801 to 805).

Application of Equation 3 (set out above) may result in each group being allocated an *ACTIVE_ID* of 1, 2, 3 4 and 5. An example of such grouping is shown in Table 5:

*Table 5: Example of ACTVE_ID grouping*

| UE Group | UE Members |
|---|---|
| 1 | UE1 to UE20 |
| 2 | UE21 to UE40 |
| 3 | UE41 to UE60 |
| 4 | UE61 to UE80 |
| 5 | UE81 to UE100 |

Assuming the Rx_burst = 1. The user equipment DRx/DTx cycles of each group are staggered. Group 801 has active periods 901, group 802 has active periods 902, group 803 has active periods 903, group 804 has active periods 904 and group 805 has active periods 905. Those active periods 901 to 905 do not overlap and lie adjacent each other. Corresponding base station DRx/DTx pattern is shown in Figure 8 and comprises active periods 900 corresponding to the sum of user equipment active periods 901 to 905. The resultant base station DRx/DTx pattern also comprises an inactive gap. $T_{gap}$. It will be understood that the base station need only handle the data traffic associated with 20 user equipment traffic at any given instance.

A person of skill in the art would readily recognise that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

**Claims**

1. A method of controlling a discontinuous transmission and/or reception power saving mode of a base station (20) in a wireless telecommunications network (10), said base station (20) being operable to communicate with at least a set of user equipment (50) operating in a discontinuous transmission and/or reception mode, said user equipment being operable to periodically switch between an active mode in which communications with said base station (20) can occur and an inactive mode in which said user equipment is dormant, said method comprising the steps of:

   determining in accordance with said discontinuous transmission or reception mode of said user equipment (50) in said set when each user equipment within said set will periodically switch to said active mode (302; 307; 308; 309) to communicate with said base station; and

   switching said base station (20) from an inactive state in which said base station is dormant (301; 305) to an active state (300; 306), in which communications with said user equipment can occur, when any of said user equipment within said set is determined to be in said active mode, thereby manipulating said power saving mode of said base station to accommodate said user equipment operating in a discontinuous transmission or reception mode.

2. The method of claim 1, comprising the step of:

   causing said user equipment (50) within said set to switch to said active mode (302; 307; 308; 309) at different times.

3. The method of claim 1 or 2, wherein user equipment (50) within said set remain in said active mode (302; 307; 308; 309) for an identical predetermined active period.

4. The method of claim 1 or 2, wherein user equipment (50) within said set remain in said active mode (302; 307; 308; 309) for a differing predetermined active period.

5. The method of claim 2, wherein said step of causing comprises causing said user equipment (50) within said set to switch to said active mode (302; 307; 308; 309) at different times in which said predetermined active periods overlap.

6. The method of claim 2, wherein said step of causing comprises causing said user equipment (50) within said set to switch to said active mode (302; 307; 308; 309) at different times in which said predetermined active periods do not overlap.

7. The method of claim 2, wherein said step of causing comprises causing said user equipment (50) within said set to switch to said active mode (302; 307; 308; 309) at different times in which said predetermined active periods are adjacent.

8. The method of claim 2, wherein said step of causing comprises causing said user equipment (50) within said set to switch to said active mode (302; 307; 308; 309) at different times in which said predetermined active periods are spaced apart.

9. The method of claim 2, wherein each set of user equipment (50) comprise user equipment having an identical type and said step of causing comprises causing user equipment from different sets to activate simultaneously.

10. The method of any preceding claim, comprising the step of:

   switching said base station (20) to said inactive state (301; 305) when none of said user equipment are in said active mode (302; 307; 308; 309).

11. The method of any preceding claim, comprising the step of:

   preventing said base station (20) from switching to said inactive state (301; 305) when it is determined that said base station (20) would need to switch back to said active state (300; 306) within a predetermined minimum gap period.

12. The method of claim 11, comprising the step of:

   causing at least one user equipment (50) to switch to said active mode (302; 307; 308; 309) during said predetermined minimum gap period.

13. A computer program product comprising code means operable, when executed on a computer, to perform the method steps of any of claims 1 to 12.

14. A base station (20) of a wireless telecommunications network (10), said base station (20) being operable to implement a discontinuous transmission and/or reception power saving mode, and said base station (20) being operable to communicate with at least a set of user equipment (50) operating in a discontinuous transmission and/or reception mode, said user equipment being operable to periodically switch between an active mode in which communications with said base station (20) can occur and an inactive mode in which said user equipment (50) is dormant, said network node comprising:

   determining logic operable to determine in accordance with said discontinuous transmission or reception mode of said user equipment in said set, when each user equipment within said set will periodically switch to said active mode to communicate with said base station; and
   switching logic operable to switch said base station from an inactive state in which said base station is dormant to an active state in which communications with said user equipment can occur when said determining logic indicates that any of said user equipment within said set is determined to be in said active mode, thereby manipulating a power saving mode of said base station to accommodate said user equipment operating in a discontinuous transmission or reception mode.

**Patentansprüche**

1. Verfahren zur Steuerung eines diskontinuierlichen Übertragungs- und/oder Empfangs-Stromsparmodus einer Basisstation (20) in einem drahtlosen Telekommunikationsnetzwerk (10), wobei die besagte Basisstation (20) dazu ausgelegt ist, mit mindestens einem Satz von Benutzergeräten (50), welche in einem diskontinuierlichen Übertragungs- und/oder Empfangsmodus betrieben werden, zu kommunizieren, wobei die besagten Benutzergeräte betreibbar sind, um periodisch zwischen einem aktiven Modus, in welchem Kommunikationen mit der besagten Basisstation (20) erfolgen können, und einem inaktiven Modus, in welchem sich das besagte Benutzergerät im Ruhezustand befindet, umzuschalten, wobei das Verfahren die folgenden Schritte umfasst:

Ermitteln, entsprechend dem besagten diskontinuierlichen Übertragungs- oder Empfangsmodus der besagten Benutzergeräte (50) in dem besagten Satz, wann jedes Benutzergerät innerhalb des besagten Satzes periodisch in den besagten aktiven Modus (302; 307; 308; 309) umschalten wird, um mit der Basisstation zu kommunizieren; und

Umschalten der besagten Basisstation (20) von einem inaktiven Zustand, in welchem sich die besagte Basisstation im Ruhezustand befindet (301; 305), in einen aktiven Zustand (300; 306), in welchem Kommunikationen mit dem besagten Benutzergerät erfolgen können, wenn ein beliebiges der besagten Benutzergeräte innerhalb des besagten Satzes als sich im aktiven Modus befindlich ermittelt wird, wodurch der besagte Stromsparmodus der besagten Basisstation manipuliert wird, um das besagte Benutzergerät, welches in einem diskontinuierlichen Übertragungs- oder Empfangsmodus betrieben wird, anzupassen.

2. Verfahren nach Anspruch 1, den folgenden Schritt umfassend:

Veranlassen, dass die besagten Benutzergeräte (50) innerhalb des besagten Satzes zu verschiedenen Zeitpunkten in den besagten aktiven Modus (302; 307; 308; 309) schalten.

3. Verfahren nach Anspruch 1 oder 2, wobei Benutzergeräte (50) innerhalb des besagten Satzes während einer identischen vorbestimmten aktiven Zeitspanne in dem besagten aktiven Modus (302; 307; 308; 309) bleiben.

4. Verfahren nach Anspruch 1 oder 2, wobei Benutzergeräte (50) innerhalb des besagten Satzes während einer unterschiedlichen vorbestimmten aktiven Zeitspanne in dem besagten aktiven Modus (302; 307; 308; 309) bleiben.

5. Verfahren nach Anspruch 2, wobei der besagte Schritt des Veranlassens das Veranlassen, dass die besagten Benutzergeräte (50) innerhalb des besagten Satzes zu unterschiedlichen Zeitpunkten, zu welchen sich die besagten vorbestimmten aktiven Zeitspannen überschneiden, in den besagten aktiven Modus (302; 307; 308; 309) schalten, umfasst.

6. Verfahren nach Anspruch 2, wobei der besagte Schritt des Veranlassens das Veranlassen, dass die besagten Benutzergeräte (50) innerhalb des besagten Satzes zu unterschiedlichen Zeitpunkten, zu welchen sich die besagten vorbestimmten aktiven Zeitspannen nicht überschneiden, in den besagten aktiven Modus (302; 307; 308; 309) schalten, umfasst.

7. Verfahren nach Anspruch 2, wobei der besagte Schritt des Veranlassens das Veranlassen, dass die besagten Benutzergeräte (50) innerhalb des besagten Satzes zu unterschiedlichen Zeitpunkten, zu welchen die besagten vorbestimmten aktiven Zeitspannen aneinandergrenzen, in den besagten aktiven Modus (302; 307; 308; 309) schalten, umfasst.

8. Verfahren nach Anspruch 2, wobei der besagte Schritt des Veranlassens das Veranlassen, dass die besagten Benutzergeräte (50) innerhalb des besagten Satzes zu unterschiedlichen Zeitpunkten, zu welchen die besagten vorbestimmten aktiven Zeitspannen voneinander beabstandet sind, in den besagten aktiven Modus (302; 307; 308; 309) schalten, umfasst.

9. Verfahren nach Anspruch 2, wobei jeder Satz von Benutzergeräten (50) Benutzergeräte eines identischen Typs umfasst, und wobei der besagte Schritt des Veranlassens das Veranlassen, dass Benutzergeräte aus unterschiedlichen Sätzen gleichzeitig aktiviert werden, umfasst.

10. Verfahren nach einem beliebigen der vorstehenden Ansprüche, den folgenden Schritt umfassend:

Schalten der besagten Basisstation (20) in den besagten aktiven Zustands (301; 305), wenn sich keines der besagten Benutzergeräte in dem besagten aktiven Modus (302; 307; 308; 309) befindet.

11. Verfahren nach einem beliebigen der vorstehenden Ansprüche, den folgenden Schritt umfassend:

Verhindern, dass die besagte Basisstation (20) in den besagten inaktiven Zustand (301; 305) schaltet, wenn ermittelt wird, dass die besagte Basisstation (20) innerhalb eines vorbestimmten Mindestzeitabstands in den besagten aktiven Zustand (300; 306) zurückschalten müsste.

12. Verfahren nach Anspruch 11, den folgenden Schritt umfassend:

Veranlassen, dass mindestens ein Benutzergerät (50) während des besagten vorbestimmten Mindestzeitabstands in den besagten aktiven Modus (302; 307; 308; 309) schaltet.

13. Computerprogramm-Produkt mit Codemitteln, welche bei der Ausführung auf einem Computer betreibbar sind, um die Verfahrensschritte gemäß einem beliebigen der Ansprüche 1 bis 12 durchzuführen.

14. Basisstation (20) eines drahtlosen Telekommunikationsnetzwerks (10), wobei die besagte Basisstation (20) für die Umsetzung eines diskontinuierlichen Übertragungs- und/oder Empfangs-Stromsparmodus betreibbar ist, und wobei die besagte Basisstation (20) für das Kommunizieren mit mindestens einem Satz von Benutzergeräten (50), welche in einem diskontinuierlichen Übertragungs- und/oder Empfangsmodus betrieben werden, betreibbar ist, wobei die besagten Benutzergeräte für das periodische Umschalten zwischen einem aktiven Modus, in welchem Kommunikationen mit der besagten Basisstation (20) erfolgen können, und einem inaktiven Modus, in welchem sich die besagten Benutzergeräte (50) im Ruhezustand befinden, betreibbar sind, wobei der besagte Netzwerkknoten umfasst:

Ermittlungslogik, betreibbar für das Ermitteln entsprechend dem besagten diskontinuierlichen Übertragungs- oder Empfangsmodus der besagten Benutzergeräte in dem besagten Satz, wann jedes Benutzergerät innerhalb des besagten Satzes periodisch in den besagten aktiven Modus umschalten wird, um mit der Basisstation zu kommunizieren; und
Schaltlogik, betreibbar für das Umschalten der besagten Basisstation von einem inaktiven Zustand, in welchem sich die besagte Basisstation im Ruhezustand befindet, in einen aktiven Zustand, in welchem Kommunikationen mit dem besagten Benutzergerät erfolgen können, wenn die besagte Ermittlungslogik angibt, dass ein beliebiges der besagten Benutzergeräte innerhalb des besagten Satzes als sich im aktiven Modus befindlich ermittelt wird, wodurch ein Stromsparmodus der besagten Basisstation manipuliert wird, um das besagte Benutzergerät, welches in einem diskontinuierlichen Übertragungs- oder Empfangsmodus betrieben wird, anzupassen.

**Revendications**

1. Procédé de commande d'un mode d'économie d'énergie d'émission et/ou de réception discontinue(s) d'une station de base (20) dans un réseau de télécommunication sans fil (10), ladite station de base (20) permettant de communiquer avec au moins un ensemble d'équipements utilisateur (50) fonctionnant dans un mode d'émission et/ou de réception discontinue(s), lesdits équipements utilisateur permettant de commuter périodiquement entre un mode actif dans lequel des communications avec ladite station de base (20) peuvent se produire et un mode inactif dans lequel lesdits équipements utilisateur sont dormants, ledit procédé comprenant les étapes suivantes :

déterminer, en fonction dudit mode d'émission ou de réception discontinue(s) desdits équipements utilisateur (50) dans ledit ensemble, à quel moment chaque équipement utilisateur dans ledit ensemble commutera périodiquement dans ledit mode actif (302 ; 307 ; 308 ; 309) pour communiquer avec ladite station de base ; et commuter ladite station de base (20) entre un état inactif, dans lequel ladite station de base est dormante (301 ; 305), et un état actif (300 ; 306), dans lequel des communications avec lesdits équipements utilisateur peuvent se produire lorsque l'un quelconque desdits équipements utilisateur dans ledit ensemble est déterminé comme étant dans ledit mode actif, manipulant ainsi ledit mode d'économie d'énergie de ladite station de base pour adapter ledit fonctionnement des équipements utilisateur dans un mode d'émission ou de réception discontinue (s).

2. Procédé selon la revendication 1, comprenant l'étape suivante :

entraîner lesdits équipements utilisateur (50) dans ledit ensemble à commuter dans ledit mode actif (302 ; 307 ; 308 ; 309) à des moments différents.

3. Procédé selon la revendication 1 ou 2, dans lequel les équipements utilisateur (50) dans ledit ensemble restent dans ledit mode actif (302 ; 307 ; 308 ; 309) pendant une période active prédéterminée identique.

**4.** Procédé selon la revendication 1 ou 2, dans lequel les équipements utilisateur (50) dans ledit ensemble restent dans ledit mode actif (302 ; 307 ; 308 ; 309) pendant une période active prédéterminée différente.

**5.** Procédé selon la revendication 2, dans lequel ladite étape d'entraînement consiste à entraîner lesdits équipements utilisateur (50) dans ledit ensemble à commuter dans ledit mode actif (302 ; 307 ; 308 ; 309) à des moments différents durant lesquels lesdites périodes actives prédéterminées se chevauchent.

**6.** Procédé selon la revendication 2, dans lequel ladite étape d'entraînement consiste à entraîner lesdits équipements utilisateur (50) dans ledit ensemble à commuter dans ledit mode actif (302 ; 307 ; 308 ; 309) à des moments différents durant lesquels lesdites périodes actives prédéterminées ne se chevauchent pas.

**7.** Procédé selon la revendication 2, dans lequel ladite étape d'entraînement consiste à entraîner lesdits équipements utilisateur (50) dans ledit ensemble à commuter dans ledit mode actif (302 ; 307 ; 308 ; 309) à des moments différents durant lesquels lesdites périodes actives prédéterminées se chevauchent.

**8.** Procédé selon la revendication 2, dans lequel ladite étape d'entraînement consiste à entraîner lesdits équipements utilisateur (50) dans ledit ensemble à commuter dans ledit mode actif (302 ; 307 ; 308 ; 309) à des moments différents durant lesquels lesdites périodes actives prédéterminées sont espacées.

**9.** Procédé selon la revendication 2, dans lequel chaque ensemble d'équipements utilisateur (50) comprend des équipements utilisateur présentant un même type et ladite étape d'entraînement consiste à entraîner les équipements utilisateur d'ensembles différents à s'activer simultanément.

**10.** Procédé selon l'une quelconque des revendications précédentes, comprenant l'étape suivante :

commuter ladite station de base (20) dans ledit état inactif (301 ; 305) lorsqu'aucun équipement utilisateur n'est dans ledit mode actif (302 ; 307 ; 308 ; 309).

**11.** Procédé selon l'une quelconque des revendications précédentes, comprenant l'étape suivante :

empêcher ladite station de base (20) de commuter dans ledit état inactif (301 ; 305) lorsque l'on détermine que ladite station de base (20) doit commuter de nouveau dans ledit mode actif (300 ; 306) pendant un intervalle de temps minimum prédéterminé.

**12.** Procédé selon la revendication 11, comprenant l'étape suivante :

entraîner au moins un équipement utilisateur (50) à commuter dans ledit mode actif (302 ; 307 ; 308 ; 309) durant ledit intervalle de temps minimum prédéterminé.

**13.** Produit de programme informatique comprenant des moyens de code permettant, lorsqu'il est exécuté sur un ordinateur, d'exécuter les étapes du procédé selon l'une quelconque des revendications 1 à 12.

**14.** Station de base (20) d'un réseau de télécommunication sans fil (10), ladite station de base (20) permettant de mettre en oeuvre un mode d'économie d'énergie d'émission et/ou de réception discontinue(s), et ladite station de base (20) permettant de communiquer avec au moins un ensemble d'équipements utilisateur (50) fonctionnant dans un mode d'émission et/ou de réception discontinue(s), lesdits équipements utilisateur permettant de commuter périodiquement entre un mode actif, dans lequel des communications avec ladite station de base (20) peuvent se produire, et un mode inactif dans lequel lesdits équipements utilisateur (50) sont dormants, ledit noeud de réseau comprenant :

une logique de détermination permettant de déterminer, en fonction dudit mode d'émission ou de réception discontinue(s) desdits équipements utilisateur dans ledit ensemble, à quel moment chaque équipement utilisateur dans ledit ensemble commutera périodiquement dans ledit mode actif pour communiquer avec ladite station de base ; et
une logique de commutation permettant de commuter ladite station de base entre un état inactif, dans lequel ladite station de base est dormante, et un état actif dans lequel des communications avec lesdits équipements utilisateur peuvent se produire lorsque ladite logique de détermination indique que l'un quelconque desdits équipements utilisateur dans ledit ensemble est déterminé comme étant dans ledit mode actif, manipulant ainsi un mode d'économie d'énergie de ladite station de base pour adapter ledit fonctionnement des équipements utilisateur dans un mode d'émission ou de réception discontinue(s).

Traditional UMTS Architecture

FIG. 1

FIGURE 2

FIGURE 3

FIGURE 4

FIGURE 5

FIGURE 6

FIGURE 7

23

FIGURE 8

24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070066329 A
- US 20100008276 A

- EP 2154921 A